Europäisches Patentamt

(19) European Patent Office    (11) Numéro de publication: **0 213 036**

Office européen des brevets    **B1**

(12)    # FASCICULE DE BREVET EUROPÉEN

(45) Date de publication du fascicule du brevet:    (51) Int. Cl. ⁵: **A 62 B  7/14**, B 64 D 11/00,
21.03.90    **E 05 C  17/04**

(21) Numéro de dépôt: 86401763.7

(22) Date de dépôt: 06.08.86

(54) Dispositif entrebailleur pour porte de boîte renfermant un équipement de sécurité tel que masques à oxygène.

(30) Priorité: 08.08.85 FR 8512162

(43) Date de publication de la demande:
04.03.87 Bulletin 87/10

(45) Mention de la délivrance du brevet:
21.03.90 Bulletin 90/12

(84) Etats contractants désignés:
DE FR GB IT NL

(56) Documents cité:
US-A-3 503 394

(73) Titulaire: **SOCIETE DE FABRICATION D'INSTRUMENTS
DE MESURE (S.F.I.M.)
13, avenue Marcel Ramolfo-Garnier
F-91301 Massy (FR)**

(72) Inventeur: **Gosse, Dominique
1 Petite Impasse des Glaces
F-78000 Versailles (FR)**
Inventeur: **Silber, Gérard
15, Résidence Croix Blanche
F-91380 Chilly-Mazarin (FR)**

(74) Mandataire: **Martin, Jean-Jacques
Cabinet REGIMBEAU 26, Avenue Kléber
F-75116 Paris (FR)**

LIBERGRAF, STOCKHOLM 1990

## Description

L'invention concerne un dispositif entrebailleur pour porte de boîte renfermant un équipement de sécurité, destiné tout particulièrement aux boîtes renfermant des masques à oxygène à bord des avions de ligne.

De telles boîtes sont habituellement prévues à bord des avions à habitacle pressurisé, pour mettre à la disposition de chaque passager un masque à oxygène en cas d'incident conduisant à une baisse de pression régnant dans l'habitacle. Une boîte spéciale est ainsi ménagée à proximité des sièges de passagers, pouvant renfermer plusieurs masques avec une rampe ou une cartouche d'oxygène chimique associée, cette cartouche devant rentrer en action à l'ouverture complète de la porte de la boîte.

L'ouverture complète est réalisée automatiquement ou manuellement, grâce à un dispositif approprié, et les masques en appui sur la face intérieure de la porte tombent alors d'un coup, et restent suspendus au bout de leur conduite d'alimentation pour pouvoir être utilisés rapidement par les passagers. Une ouverture automatique, par des moyens électriques ou pneumatiques, est naturellement préférée, pouvant être commandée directement à partir de la centrale altimétrique de bord. On utilise alors des dispositifs d'ouverture, tels que celui décrit dans la demande de brevet européen N° 0 151 063, qui nécessitent des contrôles périodiques pour la vérification de leur automatisme.

Ces visites peuvent permettre également le contrôle visuel de l'activation correcte des cartouches d'oxygène (par pastille témoin ou bandeau circulaire).

On distingue ainsi ces visites de contrôle au sol, effectuées par exemple toutes les 8 000 heures de vol, des grandes visites au cours desquelles l'ensemble de l'équipement est contrôlé, effectuées quant à elles en général toutes les 12 000 heures de vol.

Pour les opérations de maintenance effectuées lors de ces tests périodiques, il est d'usage courant de prévoir un dispositif entrebailleur permettant de retenir la porte dans une position d'ouverture partielle, tout en évitant la chute des masques dont le rangement est ensuite long et fastidieux à réaliser. Ce dispositif doit néanmoins être discret et de préhension relativement difficile pour ne pas attirer l'attention des passagers qui pourraient être tentés de le manoeuvrer.

Les dispositifs entrebailleurs actuellement connus (voir par exemple le brevet américain N° 4 518 179) sont des systèmes télescopiques à rotation, avec rappel par ressort à boudin et crantage à baïonnettes. Une platine est ainsi fixée contre le fond de la boîte, et porte une tige coulissante terminée par un bloc parallélépipédique, dont la face tournée vers l'extérieur est bordée d'une mince nervure périphérique permettant sa préhension. L'opérateur doit ainsi insérer un ongle ou un outil pour tirer le bloc à l'encontre de la force de rappel exercée par le ressort, puis, lorsque ledit bloc est dégagé de la porte, tourner celui-ci d'environ 90°, ce qui permet d'assurer alors la fonction principale du dispositif entrebailleur.

Ces dispositifs sont robustes et très fiables, mais ils restent volumineux car la platine associée occupe une certaine place dans la boîte; or la question de l'encombrement devient de plus en plus importante, surtout si l'on veut ranger jusqu'à huit masques dans une boîte. De plus, leur manoeuvre n'est pas toujours aisée, car la nervure périphérique finit par s'user, ce qui rend la préhension plus difficile, et de plus requiert toujours un double mouvement: il faut d'abord tirer sur le bloc dans une direction perpendiculaire au plan de la porte, et ce à l'encontre du ressort coaxial à la tige portant le bloc, puis tourner le bloc dans sa position d'extension maximale afin de réaliser le verrouillage par baïonnettes.

Il est également connu de prévoir une trappe de visite indépendante permettant une inspection visuelle (voir par exemple le brevet américain N° 3 503 394), la porte restant alors en position de fermeture; les dispositifs entrebailleurs sont souvent préférés à de tels systèmes, pour des raisons de coût ou de commodité.

L'invention a pour but de proposer un dispositif entrebailleur dont la structure permette une manoeuvre très simple, avec un encombrement réduit.

Un autre but de l'invention est de permettre en outre un accès par la lumière d'encastrement plus important, pour permettre notamment une ouverture manuelle aisée en cas de mauvais fonctionnement du système automatique d'ouverture des portes.

Un autre but de l'invention est de pouvoir réaliser un dispositif entrebailleur comportant un minimum de pièces, celles-ci étant de structure simple et pouvant être réalisées par moulage.

Il s'agit plus particulièrement d'un dispositif entrebailleur pour porte de boîte renfermant un équipement de sécurité tel que masques à oxygène, permettant de retenir la porte dans une position d'ouverture partielle pour des opérations de vérification effectuées sans libérer l'équipement de sécurité, caractérisé par le fait qu'il est essentiellement constitué d'un élément articulé sur la porte autour d'un axe transversal, ledit élément comportant, de part et d'autre dudit axe, une portion de manoeuvre et une portion d'accrochage, ladite portion de manoeuvre fermant, en position normale, une lumière associée ménagée dans la paroi de la porte, et ladite portion d'accrochage coopérant, en position de vérification, avec un organe d'accrochage fixé à l'intérieur de la boîte.

De préférence, la portion de manoeuvre se présente sous la forme d'une plaquette, tandis que la portion d'accrochage est évidée pour former un maillon.

Pour éviter d'attirer l'attention des passagers, sans nuire à l'esthétique, la portion de manoeuvre est intégrée dans l'épaisseur de la porte lorsque l'élément articulé est en position normale, la portion d'accrochage étant quant à elle disposée à l'intérieur de la boîte.

Afin de faciliter la manoeuvre, le bord d'extrémité de la portion de manoeuvre est avantageusement effilé.

De préférence, les portions de manoeuvre et d'accrochage forment deux plans parallèles décalés, ce qui permet d'obtenir une butée par la portion d'accrochage dans la position normale. Le débattement angulaire de l'élément articulé, entre la position normale et la position de vérification, est de l'ordre de 90°.

Avantageusement, le dispositif comporte en outre des moyens élastiques fixés sur la porte, du côté tourné vers l'intérieur de la boîte, assurant le maintien de l'élément articulé dans au moins l'une de ses positions extrêmes, en particulier des moyens qui coopèrent avec la zone centrale de l'élément articulé, au voisinage de l'axe d'articulation dudit élément, et permettant aussi d'exercer un couple de rappel vers la position normale de l'élément articulé.

A titre d'exemple, ces moyens élastiques peuvent être constitués par une lame élastique portant un galet presseur au voisinage de son extrémité libre, ou une patte élastique reliant des oreilles solidaires de la porte et prévues pour recevoir l'axe d'articulation de l'élément, ou encore par une partie de l'organe d'accrochage lui-même, qui est adjacente à la zone centrale.

Conformément à une réalisation particulièrement simple, l'élément articulé présente deux tétons latéraux formant son axe d'articulation, l'ensemble étant monobloc, et en particulier réalisé par moulage.

D'autres caractéristiques et avantages de l'invention apparaîtront plus clairement à la lumière de la description qui va suivre et des dessins annexés, illustrant des modes de réalisation particuliers, en référence aux figures, où:

- la figure 1 est une coupe illustrant un dispositif entrebailleur conforme à l'invention,
- la figure 2 est une vue en perspective de l'élément articulé de la figure 1, mais dont la portion de manoeuvre présente deux nervures longitudinales porte-étiquette,
- les figures 3 et 4 illustrent, respectivement en coupe et en vue en plan, un dispositif conforme à l'invention comportant des moyens élastiques à lame et galet presseur,
- la figure 5 et la coupe correspondante selon VI - VI de la figure 6 illustrent un support particulier d'élément articulé, assurant aussi la fonction des moyens élastiques précédents,
- la figure 7 est une vue en perspective, avec arrachement partiel, illustrant une variante du dispositif de l'invention, dans laquelle la disposition de l'élément articulé permet de réarmer aisément les moyens de verrouillage.

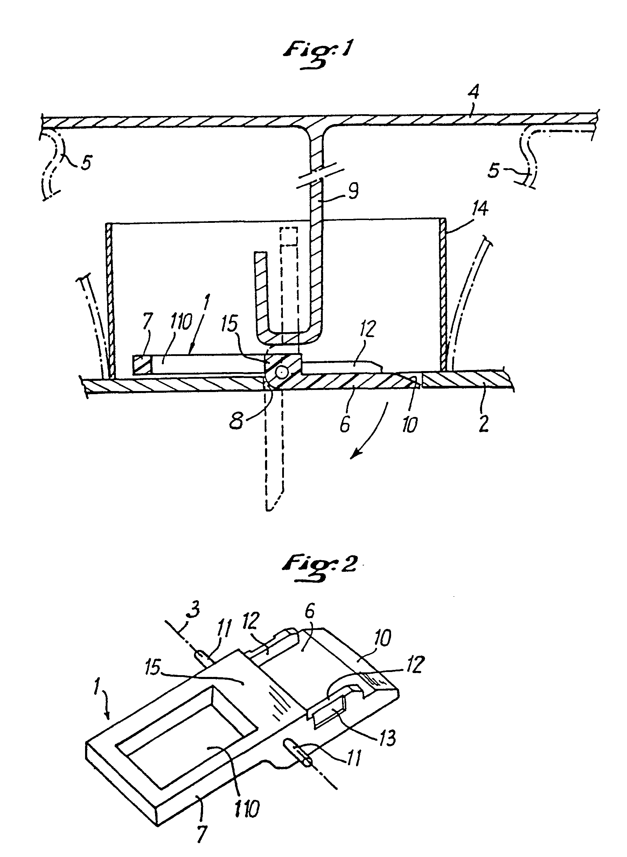

Le dispositif entrebailleur illustré aux figures 1 et 2 est essentiellement constitué d'un élément 1 articulé sur la porte 2 d'une boîte renfermant un équipement de sécurité tel que masques à oxygène, autour d'un axe transversal 3. Le fond de la boîte 4 délimite avec la porte 2, en position fermée de celle-ci qui est la position normale, une hauteur utile permettant de loger des masques à oxygène schématisés en 5 sur la figure 1. L'élément articulé 1 comporte, de part et d'autre de l'axe transversal 3, une portion de manoeuvre 6 et une portion d'accrochage 7, ladite portion de manoeuvre fermant, en position normale, une lumière associée 8 ménagée dans la paroi de la porte 2, et ladite portion d'accrochage coopérant en position de vérification, avec un organe d'accrochage 9 fixé à l'intérieur de la boîte 4.

La portion de manoeuvre 6 se présente sous la forme d'une plaquette, intégrée dans l'épaisseur de la porte 2 lorsque l'élément articulé 1 est en position normale (position illustrée en traits pleins sur la figure 1). Ceci permet d'éviter d'attirer l'attention des passagers, sans nuire à l'esthétique, puisque la face de la plaquette est au niveau de celle de la porte en position normale. Afin de faciliter la manoeuvre, le bord d'extrémité 10 est de préférence effilé, ce qui permet un passage aisé d'un ongle ou d'un outil fin. La portion d'accrochage 7 est quant à elle évidée pour former un maillon, l'ouverture centrale 110 de ce maillon permettant le passage de la partie active de l'organe d'accrochage 9, après un pivotement de l'ordre de 90° qui amène l'élément articulé 1 de la position normale à la position de vérification (illustrée en pointillés à la figure 1). Dans cette dernière position, dès que l'opérateur agit sur la commande automatique des moyens de déverrouillage, la porte 2 bascule naturellement sous le poids de l'équipement de sécurité qu'elle supporte, jusqu'à ce que le bord d'extrémité du maillon vienne en contact avec l'organe d'accrochage 9, réalisant ainsi l'entrebaillage désiré de la porte de la boîte. Ainsi que cela est visible sur la figure 2, l'élément articulé 1 présente deux tétons latéraux 11, formant l'axe d'articulation dudit élément, ces tétons étant reçus dans des goussets ou oreilles ménagées sur la face de la porte tournée vers l'intérieur de la boîte (non visibles sur la figure 1). Les portions de manoeuvre 6 et d'accrochage 7 forment ainsi deux plans essentiellement parallèles et décalés, de sorte qu'en position normale, le maillon constitue une butée pour l'élément articulé par simple appui contre la face interne de la porte. Des nervures 12 peuvent être éventuellement prévues sur la plaquette, afin d'en renforcer la rigidité, et de favoriser le support d'une étiquette insérable dans une fente latérale 13 de ladite nervure; de telles étiquettes sont d'usage courant, pour attirer l'attention de l'opérateur qui est ainsi assuré que le dispositif entrebailleur est prêt à remplir sa fonction. On notera à la figure 1 la présence d'une cloison 14 entourant le dispositif entrebailleur, cette cloison permettant de s'assurer que les masques 5 ne pourront en aucun cas venir gêner le mouvement de l'élément articulé 1.

L'élément articulé est particulièrement aisé à manoeuvrer, et peut être réalisé en un élément monobloc venu de moulage, de préférence en matière plastique. Conformément à un autre aspect important de l'invention, le dispositif entrebailleur peut comporter des moyens élastiques fixés sur la porte, du côté tourné vers l'intérieur de la boîte, afin d'assurer le maintien de l'élément articulé dans au moins une de ses positions extrêmes. La plus importante de ces positions est naturellement la position normale, car il faut éviter que l'élément articulé puisse présenter des oscillations de pivotement sous l'effet des vibrations de l'appareil, ce qui ne manquerait pas d'attirer l'attention des passagers. Plusieurs types de moyens élastiques peuvent naturellement être envisagés, et le choix de ceux-ci sera guidé par la simplicité, la fiabilité, et l'encombrement réduit.

De préférence, les moyens élastiques coopèrent avec la zone centrale 15 de l'élément articulé 1, au voisinage de l'axe d'articulation dudit élément. Cette zone centrale peut présenter à cet effet des facettes d'appui, en particulier deux facettes sensiblement orthogonales pour "marquer" les deux positions extrêmes du dispositif. A la figure 1, l'organe d'accrochage 9, ou plus exactement la portion de celui-ci qui est adjacente à la zone centrale 15, constitue un exemple de ces moyens élastiques (le jeu réel est naturellement faible, ce jeu ayant été exagéré à la figure 1 pour en simplifier la compréhension). Dans ce cas, l'organe d'accrochage 9 remplit une double fonction: une fonction d'accrochage par la forme de son extrémité pénétrant dans l'ouverture du maillon, et une fonction de rappel par son élasticité propre. De préférence, les moyens élastiques coopèrent avec la zone centrale de l'élément articulé au voisinage de l'axe d'articulation dudit élément, et sont en contact d'appui sur cette zone centrale selon une disposition qui permet d'exercer un couple de rappel vers la position normale dudit élément articulé. Un tel couple de rappel n'est pas aisé à contrôler lorsque l'organe d'accrochage constitue lui-même les moyens élastiques; les variantes qui vont suivre permettent d'exercer beaucoup plus aisément un tel couple de rappel.

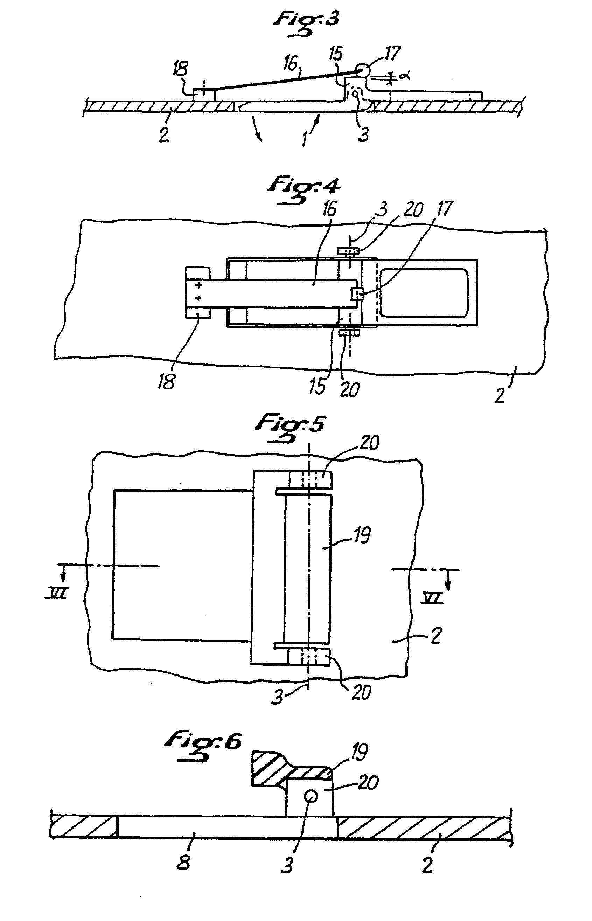

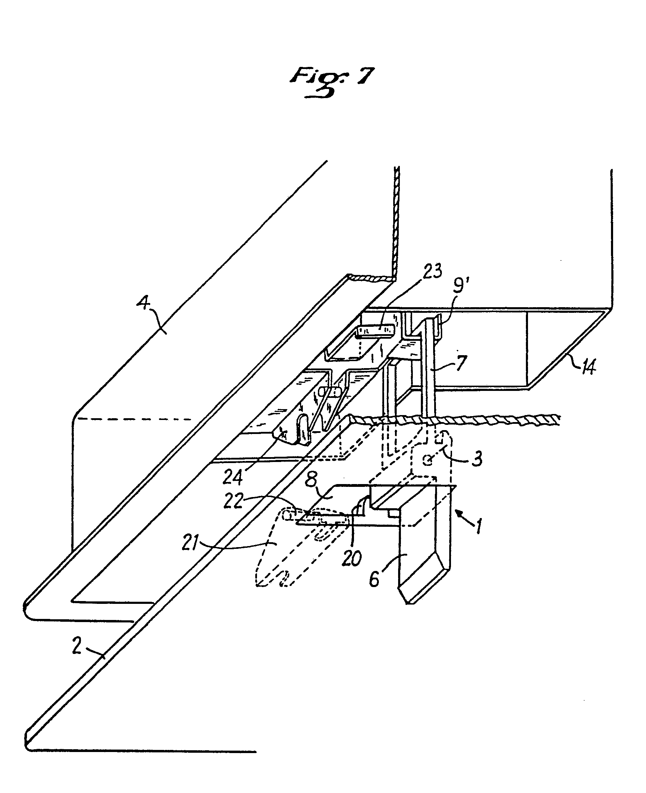

Ainsi, aux figures 3 et 4, il est prévu une lame élastique 16 portant un galet presseur 17 au voisinage de son extrémité libre, tandis que l'autre extrémité de ladite lame est fixée sur la porte 2, par exemple par l'intermédiaire d'un support 18. Il est aisé de comprendre que la position avancée du galet 17 par rapport à l'axe d'articulation 3 de l'élément 1 permet d'obtenir aisément un couple de rappel vers la position normale. Il peut s'avérer intéressant de prévoir que la facette supérieure de la zone centrale 15 présente un angle α (par exemple de l'ordre de 5°), renforçant encore l'action de la lame ressort en position normale. Aux figures 5 et 6, les moyens élastiques sont essentiellement constitués par une patte élastique 19 reliant des oreilles 20 solidaires de la porte 2, et prévues pour recevoir l'axe d'articulation 3 de l'élément articulé (en particulier les tétons 11 illustrés en figure 2). Cet élément support peut être aisément réalisé en matière plastique et moulé. Cette variante, particulièrement simple, permet de profiter au maximum d'un accès possible vers l'intérieur de la boîte par la lumière 8 lorsque le dispositif entrebailleur est en position de vérification.

Il est naturellement possible de disposer le support 18 au niveau de l'ouverture du maillon, la lame ressort 16 ayant alors une position sensiblement symétrique de celles des figures 3 et 4; avec cette disposition, la lame 16 n'est plus en regard de la lumière de la porte, de sorte que l'opérateur peut profiter au maximum de l'accès possible vers l'intérieur de la boîte en position de vérification.

La variante de l'invention illustrée en figure 7 est proche de celle des figures précédentes. Cependant, l'axe d'articulation 3 de l'élément 1 est ici essentiellement parallèle à l'axe de la charnière de la boîte à masques. Cette boîte reçoit un dispositif de commande d'ouverture dont certains éléments seulement ont été représentés. Un pontet 21 supportant un ergot de verrouillage 22 est fixé sur la porte 2, et coopère avec un verrou dont on distingue deux flasques 24. Ce dispositif comporte également un levier de réarmement manuel 23, ainsi qu'un levier d'ouverture manuelle qui est ordinairement prévu comme sécurité supplémentaire en cas de mauvais fonctionnement du dispositif automatique. Ce dispositif d'ouverture automatique ne fait pas partie de l'invention, mais on pourra utilement se reporter à la demande de brevet européen N° 0 151 063 dans laquelle la structure complète est décrite. Il est à noter que l'organe d'accrochage 9' est ici solidaire du verrou (obtenu par pliage d'une patte venue de découpage), ce qui est particulièrement simple à réaliser, mais surtout que la disposition de la lumière 8 permet un accès aisé au verrou lorsque l'élément articulé 1 est en position de vérification. Ceci est particulièrement intéressant car, si la porte reste fermée en raison d'un mauvais fonctionnement du système automatique d'ouverture de porte (électrique ou pneumatique), il est possible d'utiliser le dispositif entrebailleur pour accéder directement au verrou encliqueté, et opérer une ouverture manuelle; lorsque la porte est entrebaillée, on peut également refermer manuellement le verrou sans qu'il soit besoin d'utiliser un outil particulier (dans les deux cas, ceci permet notamment de supprimer le trou prévu dans la porte avec les dispositifs entrebailleurs existants, ce qui simplifie encore la structure et améliore l'esthétique d'ensemble).

Dans tous les cas, le dispositif entrebailleur de l'invention reste aisé à manoeuvrer, cette manoeuvre ne comportant en particulier qu'un seul mouvement simple de basculement contrairement aux dispositifs existants, et sa structure particulièrement simple permet une réalisation économique du fait du faible nombre de pièces nécessaires.

Il va de soi que l'invention n'est pas limitée aux modes de réalisation qui viennent d'être décrits, mais englobe au contraire toute variante reprenant, avec des moyens équivalents, les caractéristiques essentielles figurant aux revendications.

7

En particulier, la forme de l'élément articulé n'est pas critique, la forme rectangulaire plate n'étant citée que comme un mode de réalisation avantageux. De même, l'homme de l'art pourra imaginer aisément d'autres types de moyens élastiques assurant le maintien de l'élément articulé dans au moins l'une de ses positions extrêmes.

**Revendications**

1. Dispositif entrebailleur pour porte de boîte renfermant un équipement de sécurité tel que masques à oxygène, permettant de retenir la porte dans une position d'ouverture partielle pour des opérations de vérification effectuées sans libérer l'équipement de sécurité, caractérisé par le fait qu'il est essentiellement constitué d'un élément (1) articulé sur la porte (2) autour d'un axe transversal (3), ledit élément comportant, de part et d'autre dudit axe, une portion de manoeuvre (6) et une portion d'accrochage (7), ladite portion de manoeuvre fermant, en position normale, une lumière associée (8) ménagée dans la paroi de la porte (2), et ladite portion d'accrochage coopérant, en position de vérification, avec un organe d'accrochage (9, 9') fixé à l'intérieur de la boîte (4).

2. Dispositif entrebailleur selon la revendication 1, caractérisé par le fait que la portion de manoeuvre (6) se présente sous la forme d'une plaquette, tandis que la portion d'accrochage (7) est évidée pour former un maillon.

3. Dispositif entrebailleur selon l'une des revendications 1 et 2, caractérisé par le fait que la portion de manoeuvre (6) est intégrée dans l'épaisseur de la porte lorsque l'élément articulé (1) est en position normale, la portion d'accrochage étant quant à elle disposée à l'intérieur de la boîte.

4. Dispositif entrebailleur selon la revendication 3, caractérisé par le fait que le bord d'extrémité de la portion de manoeuvre (6) est effilé.

5. Dispositif entrebailleur selon l'une des revendications 1 à 4, caractérisé par le fait que les portions de manoeuvre (6) et d'accrochage (7) forment deux plans parallèles décalés.

6. Dispositif entrebailleur selon l'une des revendications 1 à 5, caractérisé par le fait que le débattement angulaire de l'élément articulé (1), entre la position normale et la position de vérification, est de l'ordre de 90°.

7. Dispositif entrebailleur selon l'une des revendications 1 à 6, caractérisé par le fait qu'il comporte en outre des moyens élastiques (9, 16, 19), assurant le maintien de l'élément articulé (1) dans au moins l'une de ses positions extrêmes.

8

8. Dispositif entrebailleur selon la revendication 7, caractérisé par le fait que les moyens élastiques (9, 16, 19) coopèrent avec la zone centrale (15) de l'élément articulé (1), au voisinage de l'axe d'articulation dudit élément.

9. Dispositif entrebailleur selon la revendication 8, caractérisé par le fait que les moyens élastiques (9, 16, 19) sont en contact d'appui sur la zone centrale (15), et permettent d'exercer un couple de rappel vers la position normale de l'élément articulé (1).

10. Dispositif entrebailleur selon l'une des revendications 8 et 9, caractérisé par le fait que les moyens élastiques sont essentiellement constitués par une lame élastique (16) portant un galet presseur (17) au voisinage de son extrémité libre.

11. Dispositif entrebailleur selon l'une des revendications 8 et 9, caractérisé par le fait que les moyens élastiques sont essentiellement constitués par une patte élastique (19) reliant des oreilles (20) solidaires de la porte et prévues pour recevoir l'axe d'articulation de l'élément (1).

12. Dispositif entrebailleur selon l'une des revendications 8 et 9, caractérisé par le fait que les moyens élastiques sont constitués par une partie de l'organe d'accrochage (9) lui-même, qui est adjacente à la zone centrale (15).

13. Dispositif entrebailleur selon l'une des revendications 1 à 12, caractérisé par le fait que l'élément articulé (1) présente deux tétons latéraux (11) formant son axe d'articulation, l'ensemble étant monobloc, et en particulier réalisé par moulage.

**Patentansprüche**

1. Vorrichtung zum teilweisen Öffnen der Tür eines eine Sicherheitsausrüstung, zum Beispiel Sauerstoffmasken, enthaltenden Faches, die ermöglicht, die Tür für Nachprüfungen, die durchgeführt werden, ohne die Sicherheitsausrüstung freizusetzen, in einer teilweise geöffneten Stellung zu halten, gekennzeichnet durch die Tatsache, daß sie im wesentlichen aus einem an der Tür (2) um eine transversale Achse (3) gelenkig angebrachten Element (1) besteht, wobei dieses Element beiderseits der Achse einen Manövrierteil (6) und einen Verankerungsteil (7) aufweist, wobei der Manövrierteil in einer normalen Stellung eine zugeordnete Öffnung (8), die in der Wand der Tür (2) angeordnet ist, abschaltet und wobei der Verankerungsteil in einer Nachprüfstellung mit einem an das Innere des Fachs (4) befestigten Verankerungsanordnung (9, 9') zusammenwirkt.

2. Vorrichtung zum teilweisen Öffnen nach Anspruch 1, gekennzeichnet durch die Tatsache, daß der Manövrierteil (6) die Form einer Plakette aufweist, während der Verankerungsteil (7) hohl ist, um ein Kettenglied zu bilden.

3. Vorrichtung zum teilweisen Öffnen nach Anspruch 1 und 2, gekennzeichnet durch die Tatsache, daß der Manövrierteil (6) in die Dicke der Tür integriert ist, wenn das gelenkig angebrachte Element (1) in normaler Stellung ist, wobei der Verankerungsteil (7) deswegen im Innern des Fachs angeordnet ist.

4. Vorrichtung zum teilweisen Öffnen nach Anspruch 3, gekennzeichnet durch die Tatsache, daß der äußerste Rand des Manövrierteils (6) konisch zuläuft.

5. Vorrichtung zum teilweisen Öffnen nach einem der Ansprüche 1 bis 4, gekennzeichnet durch die Tatsache, daß der Manövrierteil (6) und der Verankerungsteil (7) zwei parallele, voneinander entfernte Ebenen bilden.

6. Vorrichtung zum teilweisen Öffnen nach einem der Ansprüche 1 bis 5, gekennzeichnet durch die Tatsache, daß die winkelmäßige Drehbewegung des gelenkig angebrachten Elements (1) zwischen der normalen und der Nachprüfstellung in der Größenordnung von 90° ist.

7. Vorrichtung zum teilweisen Öffnen nach einem der Ansprüche 1 bis 6, gekennzeichnet durch die Tatsache, daß sie desweiteren eine elastische Vorrichtung (9, 16, 19) aufweist, die das Festhalten des gelenkig angebrachten Elements (1) in wenigstens einer seiner äußersten Positionen sicherstellt.

8. Vorrichtung zum teilweisen Öffnen nach Anspruch 7, gekennzeichnet durch die Tatsache, daß die elastische Vorrichtung (9, 16, 19) mit dem zentralen Bereich (15) des gelenkig angebrachten Elements (1) in der Nachbarschaft der Gelenkachse des Elements zusammenwirkt.

9. Vorrichtung zum teilweisen Öffnen nach Anspruch 8, gekennzeichnet durch die Tatsache, daß die elastische Vorrichtung stützend mit dem zentralen Bereich (15) in Verbindung steht und erlaubt, ein Rückführmoment zur normalen Stellung des gelenkig angebrachten Elements (1) auszuüben.

10. Vorrichtung zum teilweisen Öffnen nach einem der Ansprüche 8 und 9, gekennzeichnet durch die Tatsache, daß die elastische Vorrichtung im wesentlichen aus einer elastischen Lamelle (16) besteht, die eine Druckrolle (17) in der Nähe ihres freien Endes trägt.

11. Vorrichtung zum teilweisen Öffnen nach einem der Ansprüche 8 und 9, gekennzeichnet durch die Tatsache, daß die elastische Vorrichtung im wesentlichen aus einer elastischen Klemme (19) besteht, die die zusammenhängenden Türösen (20) verbindet, und vorgesehen ist, die Gelenkachse des Elements (1) aufzunehmen.

12. Vorrichtung zum teilweisen Öffnen nach einem der Ansprüche 8 und 9, gekennzeichnet durch die Tatsache, daß die elastische Vorrichtung aus einem Teil der Verankerungsanordnung (9) selbst besteht, die an den zentralen Bereich (15) angrenzt.

13. Vorrichtung zum teilweisen Öffnen nach einem der Ansprüche 1 bis 12, gekennzeichnet durch die Tatsache, daß das gelenkig angebrachte Element (1) zwei laterale Ansatzkuppen (11) besitzt, die seine Gelenkachse bilden, wobei die Anordnung aus einem Block besteht und speziell aus Guß hergestellt ist.

**Claims**

1. A device for half-opening the door of a box containing safety equipment such as oxygen mask, said device enabling said door to be held in a partially open position for inspection purposes without releasing the safety equipment, characterized in that the device is constituted by a half-opening member (1) hinged to the door (2) about a transverse axis (3), said half-opening member having an operating portion (6) on one side of said axis and a latching portion (7) of the other side of said axis, said operating portion, when in a normal position, closing an associated opening (8) through said door (2), and said latching portion, when in an inspection position, cooperating with a latching member (9, 9') fixed inside the box (4).

2. A device according to claim 1, characterized in that the operating portion (6) is in the form of a plate, whereas said latching portion (7) is hollow and constitutes a loop.

3. A device according to claim 1 or 2, characterized in that the operating portion (6), when the hinged half-opening member (1) is in its normal position, is integrated in the thickness of the door, with the latching portion being disposed inside the box.

4. A device according to claim 3, characterized in that the end of the operating portion (6) furthest from said axis is tapered.

5. A device according to anyone of claims 1 to 4, characterized in that the operating portion (6) and the latching portion (7) occupy two parallel planes which are offset from each other.

6. A device according to anyone of claims 1 to 5, characterized in that the hinged half-opening member (1) rotates between its normal position and its inspection position through an angle of about 90°.

7. A device according to anyone of claims 1 to 6, characterized in that it further includes resilient means (9, 16, 19) disposed to hold the hinged half-opening member (1) in at least one of its extreme positions.

8. A device according to claim 7, characterized in that the resilient means (9, 16, 19) co-operate with the middle zone (15) of the hinged half-opening member (1) in the vicinity of said transverse axis about which it is hinged.

9. A device according to claim 8, characterized in that the resilient means (9, 16, 19) press against the middle zone (15) of the hinged half-opening member (1) and exert a return couple towards the normal position of the hinged half-opening member (1).

10. A device according to claim 8 or 9, characterized in that the resilient means are constituted by a resilient blade (16) carrying a presser wheel (17) in the vicinity of its free end.

11. A device according to claim 8 or 9, characterized in that the resilient means are constituted by a resilient tab (19) interconnecting lugs (20) fixed to the door and provided to receive a shaft constituting said transverse axis about which said half-opening member (1) is hinged.

12. A device according to claim 8 or 9, characterized in that the resilient means are constituted by a part of said latching portion (9) itself located close to the middle zone (15) of said half-opening member.

13. A device according to anyone of claims 1 to 12, characterized in that the hinged half-opening member (1) has two outwardly projecting pegs (11) constituting its hinge shaft, said assembly being constituted one-piece and more particularly by molding.

*Fig. 1*

*Fig. 2*

*Fig:3*

*Fig:4*

*Fig:5*

*Fig:6*

## Fig. 7